# EUROPEAN PATENT SPECIFICATION

(11) **EP 3 460 589 B1**
(45) Date of publication and mention of the grant of the patent: **19.08.2020**
(21) Application number: 18196222.6
(22) Date of filing: 24.09.2018
(51) Int. Cl.: G04B 37/14, G04G 17/00, G04B 47/06

(54) **MAGNETISM SENSOR EQUIPPED TIMEPIECE**
MAGNETISMUSSENSOR AUSGESTATTETE UHR
PIÈCE D'HORLOGERIE ÉQUIPÉE DE CAPTEURS DE MAGNÉTISME

(30) Priority: 25.09.2017 JP 2017184177; 25.09.2017 JP 2017184178; 30.05.2018 JP 2018103235
(43) Date of publication of application: 27.03.2019
(73) Proprietor: Seiko Epson Corporation, Tokyo 160-8801 (JP)
(72) Inventor: Kobayashi, Atsushi, Suwa-shi, Nagano 392-8502 (JP); Mishima, Yoshio, Suwa-shi, Nagano 392-8502 (JP)
(74) Representative: Hoffmann Eitle

(56) References cited:
- WO-A1-2004/083780
- CH-A- 207 554
- Majork: "Anti-magnetic springbars", Omega Forums, 10 October 2016 (2016-10-10), pages 1-9, XP055662931, Retrieved from the Internet: URL:https://omegaforums.net/threads/anti-m agnetic-springbars.46888/ [retrieved on 2020-01-29]
- Anonymous: "Sinn EZM1 - Page 1 - Watches - PistonHeads", , 3 October 2009 (2009-10-03), XP055671205, Retrieved from the Internet: URL:https://www.pistonheads.com/gassing/to pic.asp?h=0&f=12&t=755269 [retrieved on 2020-02-24]
- Anonymous: "Rolex quartz Beta Genuine Titanium SPRINGBARS Pair 23-9390 Anse Titanium | eBay", , 17 December 2019 (2019-12-17), XP055671208, Retrieved from the Internet: URL:https://www.ebay.co.uk/itm/Rolex-Quart z-Beta-Genuine-Titanium-Springbars-Pair-23 -9390-Anse-Titanio/142656883162?hash=item2 1370349da:g:0~QAAOSw8-FaXLAw [retrieved on 2020-02-24]
- Anonymous: "Spring bars for Sinn's.", , 26 July 2016 (2016-07-26), XP055671200, Retrieved from the Internet: URL:https://forums.watchuseek.com/f24/spri ng-bars-sinns-3424354.html [retrieved on 2020-02-24]
- Anonymous: "Are titanium spring bars a thing? - Page 3", , 18 September 2019 (2019-09-18), XP055671204, Retrieved from the Internet: URL:https://forums.watchuseek.com/f222/tit anium-spring-bars-thing-5034389-3.html [retrieved on 2020-02-24]

## Description

### BACKGROUND

### 1. Technical Field

The present invention relates to a magnetism sensor equipped timepiece with a magnetism sensor.

### 2. Related Art

There is a known magnetism sensor equipped timepiece including a built-in magnetism sensor that measures the orientation. A magnetism sensor cannot measure correct orientation when the sensor is affected by magnetism. There is therefore, for example, a magnetism sensor equipped timepiece including a corrector for removing the effect of a magnetic field produced by a stepper motor in the timepiece (JP-A-10-170664) .

In a magnetism sensor equipped timepiece, one of the parts that affect the magnetism sensor is a timepiece band as well as parts in a timepiece case. In particular, in a case where the timepiece band and a part that connects the timepiece band to the timepiece case are made of a material that is likely to be magnetized, a magnetized part affects the magnetism sensor in such a way that the magnetism sensor does not normally operate.

It is therefore conceivable that use of a timepiece band made of a non-magnetic material, such as titanium, prevents magnetization of the band and hence prevents the band from affecting the magnetism sensor.

In a case where each end piece of the timepiece band is attached between two bows of the timepiece case, the end piece is typically attached via a spring rod made of a SUS material. In this case, the spring rod is likely to be magnetized, and in the case where the spring rod is magnetized, the magnetized spring rod affects the magnetism sensor, and the magnetism sensor cannot undesirably measure or indicate accurate orientation.

Further, WO 2004/083780 A1 is concerned with an azimuth measuring apparatus.

### SUMMARY

An advantage of some aspects of the invention is to provide a magnetism sensor equipped timepiece capable of reducing the effect of a magnetic field on a magnetism sensor.

A magnetism sensor equipped timepiece according to an aspect of the invention is defined in claim 1.

According to the aspect of the invention, since the spring rods, which link the band to the bows of the case of the timepiece, are each formed of the pipe and the pin, which are each made of titanium, and the spring, which is made of a non-magnetic material that has elasticity and is unlikely to be magnetized, such as a cobalt-nickel alloy, a situation in which the spring rods are magnetized and affects the magnetism sensor can be avoided. The magnetism sensor therefore correctly operates and can detect and indicate correct orientation.

In the magnetism sensor equipped timepiece according to the aspect of the invention, the pipes and the pins are each made of a titanium-based material.

According to the aspect of the invention with this configuration, since the pipes and the pins are each made of a titanium-based material, magnetization of the pipes and the pins can be avoided, whereby a situation in which the magnetism sensor is affected by the magnetic field produced by the magnetized pipes and pins can be avoided. Further, the weight of the spring rods can be reduced as compared with a case where the spring rods are made of stainless steel, such as SUS316.

In the magnetism sensor equipped timepiece according to the aspect of the invention, it is preferable that the springs are made of a cobalt-nickel alloy.

According to the aspect of the invention with this configuration, since the springs are made of a cobalt-nickel alloy, not only can magnetization of the springs be avoided, and a situation in which the magnetism sensor is affected by the magnetic field produced by the springs if they are magnetized can be avoided, but spring behavior necessary for the springs can be provided.

In the magnetism sensor equipped timepiece according to the aspect of the invention, the band may have end pieces made of a non-magnetic material, and the end pieces may be attached to the bows of the case via the spring rods.

According to the aspect of the invention with this configuration, since the end pieces made of a non-magnetic material, such as a titanium-based material, are attached to the bows of the case via the spring rods, the end pieces can be so attached to the case by warping the spring rods that the end pieces do not rotate relative to the case, whereby a situation in which the end pieces have play relative to the case can be avoided.

In the magnetism sensor equipped timepiece according to the aspect of the invention, the spring rods may each be covered with a cover member made of a non-magnetic material, and the band may be a drawing passthrough band made of a non-metal material.

According to the aspect of the invention with this configuration, a drawing passthrough band can be configured by causing a band made of a non-metal material, such as a leather band, a silicon band, a nylon band, and a urethane band, to pass through the gap between the case and the spring rod on the 12-o'clock side of the case via the case back and through the gap between the case and the spring rod on the 6-o'clock side of the case. In this process, since the spring rods are each covered with the cover member made of a non-magnetic material, such as titanium and SUS316, direct contact of the spring rods with the band can be avoided. Therefore, even in a case where a flange that allows a jig to catch the pin of each of the spring rods is formed, a situation in which the flange is caught by the band and the band is damaged can be avoided. It is therefore unnecessary to separately prepare spring rods with no flange, whereby the number of types of spring rod can be reduced, and the cost of the timepiece can be lowered.

A magnetism sensor equipped timepiece according to another aspect of the invention is defined in claim 5. The pipes and the pins are each made of a non-magnetic material, and the C rings are made of a non-magnetic material having elasticity.

According to the aspect of the invention, since a non-metal band, such as a leather band, is used as the band for the timepiece, a situation in which the band is magnetized and affects the magnetism sensor can be avoided. Further, since connection members that connect the band to the bows of the case of the timepiece are each formed of the pipe and the pin made of a non-magnetic material that is unlikely to be magnetized, such as titanium, and the C ring made of a non-magnetic material that has elasticity and is unlikely to be magnetized, such as a cobalt-nickel alloy, a situation in which the connection members are magnetized and affect the magnetism sensor can be avoided. Therefore, a situation in which the band for the timepiece and the band connection members are magnetized and affects the magnetism sensor can be avoided, whereby the magnetism sensor correctly operates and can detect and indicate correct orientation.

In the magnetism sensor equipped timepiece according to the aspect of the invention, it is preferable that the pipes and the pins are each made of SUS316 or a titanium-based material.

According to the aspect of the invention with this configuration, since the pipes and the pins are each made of SUS316 or a titanium-based material, a situation in which the pipes and the pins are magnetized and the magnetic field produced by the magnetized pipes and pins affects the magnetism sensor can be avoided.

Further, the pipes and the pins each made of SUS316 allow an inexpensive configuration as compared with a case where the pipes and the pins are each made of a titanium-based material. The pipes and the pins each made of a titanium-based material allow weight reduction as compared with the case where the pipes and the pins are each made of SUS316.

In the magnetism sensor equipped timepiece according to the aspect of the invention, it is preferable that the C rings are made of a cobalt-nickel alloy.

According to the aspect of the invention with this configuration, since the C rings are made of a cobalt-nickel alloy, not only can magnetization of the C rings be avoided, and a situation in which the magnetism sensor is affected by the magnetic field produced by the C rings if they are magnetized can be avoided, but spring behavior necessary for the C rings can be provided.

In the magnetism sensor equipped timepiece according to the aspect of the invention, it is preferable that the case includes a case main body including a built-in magnetism sensor and movable bows linked to the case main body, and that the band is connected to the movable bows via the pins.

According to the aspect of the invention with this configuration, the magnetism sensor equipped timepiece includes the movable bows. Therefore, when the magnetism sensor equipped timepiece is worn around an arm, the movable bows pivot relative to the case main body and therefore follow the shape of the wrist, whereby the timepiece can be worn with increased wearability.

### BRIEF DESCRIPTION OF THE DRAWINGS

The invention will be described with reference to the accompanying drawings, wherein like numbers reference like elements.
Fig. 1 is a front view showing a magnetism sensor equipped timepiece according to a first embodiment of the invention.
Fig. 2 is a cross-sectional view showing the structure that links a band to bows in the first embodiment.
Fig. 3 is a cross-sectional view showing a spring rod that links the band to the bows.
Fig. 4 is a perspective view showing a magnetism sensor equipped timepiece according to a variation of the first embodiment of the invention.
Fig. 5 is an enlarged cross-sectional view showing the structure for attaching a drawing pass-through band in the variation.
Fig. 6 is a front view showing a magnetism sensor equipped timepiece according to a second embodiment of the invention.
Fig. 7 is a perspective view showing the magnetism sensor equipped timepiece according to the second embodiment.
Fig. 8 is a cross-sectional view showing the structure that links a band to movable bows in the second embodiment.
Fig. 9 is an enlarged cross-sectional view showing the detailed structure that links the band to the movable bows in the second embodiment.

### DESCRIPTION OF EXEMPLARY EMBODIMENTS

### First embodiment

A magnetism sensor equipped timepiece 1 (hereinafter abbreviated to timepiece 1) according to a first embodiment of the invention will be described below with reference to the drawings.

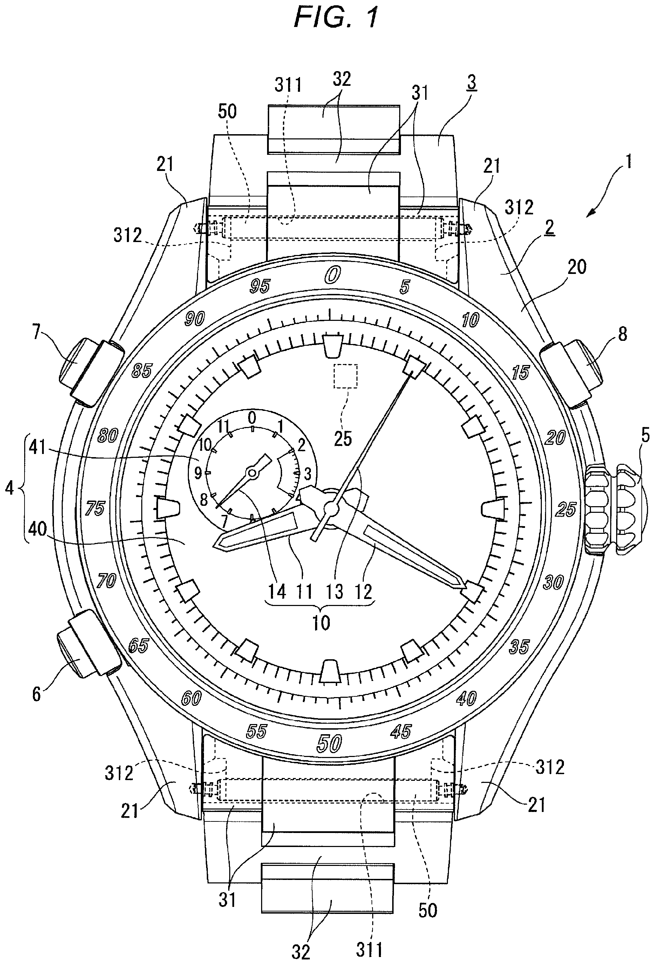

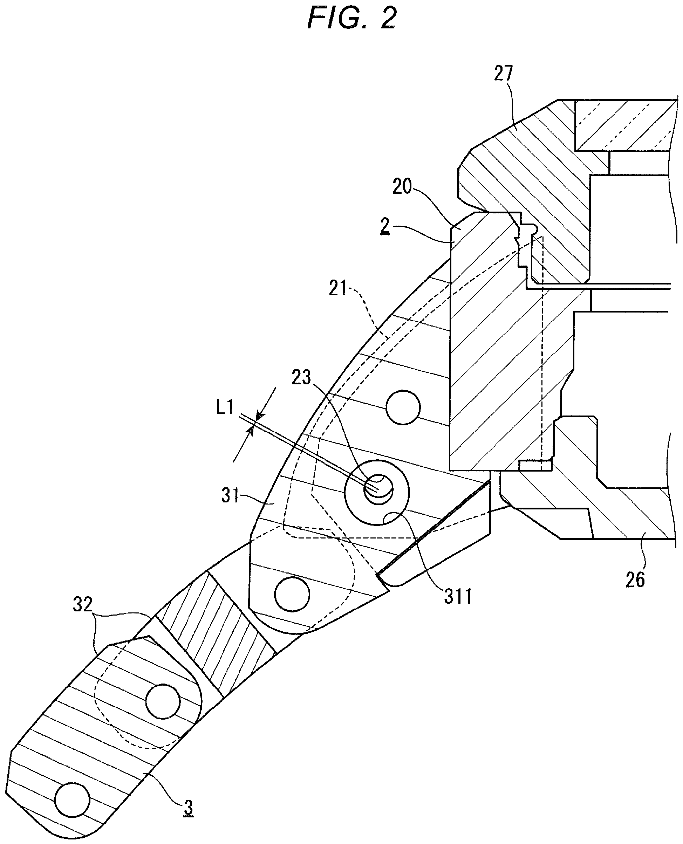

The timepiece 1 is a wristwatch worn around a user's wrist and includes an exterior case 2 and a timepiece band 3 connected to the exterior case 2, as shown in Figs. 1 and 2. The exterior case 2 is provided with a movement that is not shown, a disc-shaped dial 4, indicating hands 10, and a crown 5, an A button 6, a B button 7, and a C button 8, which are each an operation member.

The dial 4 includes a main dial 40 and a sub-dial 41. The indicating hands 10 include center hands (hour hand 11, minute hand 12, and orientation indicating hand 13), which indicate information provided on the main dial 40, and a small second hand 14, which indicates information provided on the sub-dial 41.

The hour hand 11, the minute hand 12, the orientation indicating hand 13, and the small minute hand 14 are each driven with a motor provided in the movement.

The exterior case 2 includes a barrel 20, a case back 26, and a glass bezel 27, as shown in Fig. 2, and these parts are each made of a titanium-based material, such as pure titanium. A pair of bows 21, to which the band 3 is attached, are formed on each of the 12-o'clock side and 6-o'clock side of the barrel 20.

The opposing surfaces of the pair of bows 21 have bow holes 23, into which a spring rod 50, which will be described later, is inserted.

The exterior case 2 accommodates a magnetism sensor 25. In the timepiece 1 according to the present embodiment, the magnetism sensor 25 is disposed in a position close to the 12-o'clock mark on the dial 4 in a plan view, as shown in Fig. 1.

When any of the operation members is so operated that a compass mode in which the orientation is indicated is selected, the magnetism sensor 25 starts operating and performs orientation measurement, and the orientation indicting hand 13 indicates the "north" direction based on the result of the measurement.

The band 3 includes end pieces 31, which are connected to the pairs of bows 21 on the 12-o'clock side and 6-o'clock side of the exterior case 2, a plurality of intermediate pieces 32, and a clasp that is not shown, as shown also in Fig. 2.

The end pieces 31 and the intermediate pieces 32 are made of a titanium-based material, such as pure titanium. Each of the end pieces 31 can be linked to the adjacent intermediate piece 32 by using a typical C ring and a pin as a metal band linkage structure. To improve the anti-magnetism performance, however, it is preferable that the pin is made of a non-magnetic material, such as a titanium-based material and SUS316, and the C ring is made of a non-magnetic material having elasticity, such as a cobalt-nickel alloy.

The clasp may be made of a titanium-based material or may be made of stainless steel, such as SUS304, because the clasp is so provided as to be separate from the magnetism sensor 25 and hardly affects the magnetism sensor 25 even if the clasp is magnetized.

The end pieces 31 each have a through hole 311, which passes through the end piece 31 in the width direction of the band 3, and the spring rod 50 is inserted through the through hole 311.

The spring rod 50 having inserted through the through hole 311 in each of the end pieces 31 is then inserted into the bow holes 23 in the bows 21, as described above, whereby the bows 21 and the end pieces 31, that is, the exterior case 2 and the band 3 are linked to each other. The center axis of the through hole 311 is shifted from the center axis of the bow holes 23 by a predetermined dimension L1, as shown in Fig. 2. The spring rod 50 is therefore so disposed as to be warped, so that the band 3 is pressed against the case 2. As a result, the end pieces 31 of the band 3 are so linked to the case 2 as not to rotate.

Further, cutouts 312, which communicate with opposite end portions of the through hole 311, are formed in the rear surface of each of the end pieces 31, and the opposite ends of the spring rod 50 inserted into the through hole 311 are exposed through the cutouts 312.

### Configuration of spring rod

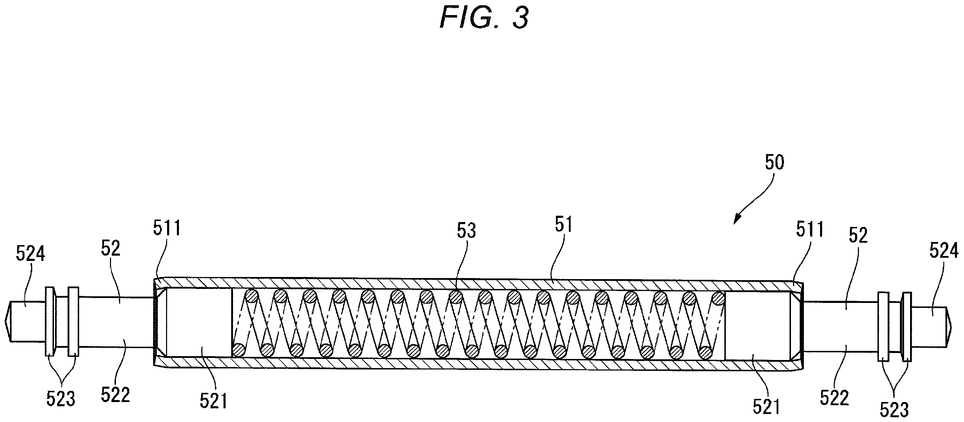

Fig. 3 is a cross-sectional view of the spring rod 50. The spring rod 50 includes a cylindrical pipe 51, a pair of pins 52, which are inserted via the opposite ends of the pipe 51, and a spring 53, which is located in the pipe 51 and between the pair of pins 52 and urges the pins 52 toward the outer side of the pipe 51.

The pipe 51 is a titanium tube made of pure titanium, which is a non-magnetic material that is unlikely to be magnetized. Opening end sections 511 of the pipe 51 are so processed as to be bent toward the center axis of the pipe 51 so that the diameter of the openings is smaller than the inner diameter of the pipe 51. The opening end sections 511 engage with stepped portions of the pins 52 (stepped portion between a large-diameter section 521 and a small-diameter portion 522, which will be described later) to prevent the pins 52 from coming off the pipe 51.

The pins 52 are made of a titanium-based material, such as a titanium alloy, which is a non-magnetic material that is unlikely to be magnetized. The pins 52 each include the large-diameter section 521, the small-diameter portion 522, flanges 523, and an insertion section 524.

The large-diameter section 521 is a portion that is disposed in the pipe 51 and is in contact with the spring 53, and the diameter of the large-diameter section 521 is set to be greater than the dimension of the opening of the opening end sections 511 of the pipe 51 described above.

The small-diameter section 522 is so formed as to be continuous with the large-diameter section 521 and has a diameter smaller than the dimension of the opening of the opening end sections 511. The small-diameter section 522 therefore protrudes out of the pipe 51 through the opening of the opening end section 511.

The flanges 523 are formed of two flanges 523 located at an end portion of the small-diameter section 522 with an axial gap between the two flanges 523. The diameter of the flanges 523 is set to be greater than the diameter of the small-diameter section 522. The flanges 523 are further set to be greater than the dimension of the opening of the opening end section 511. Therefore, when the pins 52 are each pushed into the pipe 51, the flanges 523 come into contact with the opening end section 511 and cannot be pushed any further. The flanges 523 are further set to be greater than the dimension of the opening of each of the bow holes 23. Therefore, when the insertion section 524 is inserted into the bow hole 23, the flanges 523 come into contact with the bow 21.

The insertion section 524 is so formed as to be continuous with the flanges 523 and have a diameter smaller than the diameter of the small-diameter section 522. The insertion section 524 is so dimensioned as to be insertable into the bow holes 23 of the pair of bows 21.

The thus configured pins 52 can smoothly advance and retreat along the axial direction of the pipe 51.

The spring 53 is a coil spring made of a cobalt-nickel alloy. The cobalt-nickel alloy used to form the spring 53 is a non-magnetic material that behaves as a spring (has elasticity) and is unlikely to be magnetized.

In the thus configured spring rod 50, the pins 52 can advance, as shown in Fig. 3, in such a way that the pins 52 are urged by the spring 53 and the small-diameter section 522 protrudes out of the pipe 51, and retreat, although not shown, in such a way that the pins 52 are pushed into the pipe 51 and the flanges 523 are in contact with the opening end section 511 of the pipe 51.

The step of linking each of the end pieces 31 of the band 3 to the bows 21 of the exterior case 2 by using the sprig rod 50 will next be described.

The spring rod 50 is first inserted into the through hole 311 of the end piece 31.

A jig for the spring rod is then put through one of the cutouts 312 in the rear surface of the end piece 31, and the end piece 31 is placed between the pair of bows 21 while the pins 52 are pushed into the pipe 51 with the jig engaging with the flanges 523. When the jig produced force that pushes the pins 52 is then reduced with the insertion sections 524 aligned with the bow holes 23, the pins 52 then move outward under the urging force produced by the spring 53, and the insertion sections 524 are inserted into the bow holes 23. In this process, since the center axis of the through hole 311 into which the spring rod 50 has been inserted is shifted from the center axis of the bow holes 23, the spring rod 50 is warped. The end piece 31 is therefore pushed against the exterior case 2 and so fixed to the exterior case 2 as not to rotate.

To detach the band 3, the jig is put through one of the cutouts 312 to move the pins 52 into the pipe 51 in such a way that the pins 52 come off the bow holes 23. As a result, the spring rod 50 disengages from the bow holes 23, and the end pieces 31 can be detached from the bows 21.

### Advantageous effects of first embodiment

The first embodiment described above can provide the following advantageous effects.

Since the end pieces 31 and the intermediate pieces 32 each made of a titanium-based material are used as the band 3, a situation in which the metal band 3 is magnetized and affects the magnetism sensor 25 can be avoided.

Further, since the titanium pipe 51, the titanium pins 52, and the cobalt-nickel alloy spring 53 are used as the spring rod 50, which links the band 3 to the bows 21, the spring rod 50 can be made of materials that are unlikely to be magnetized. Magnetization of the spring rod 50 can therefore be avoided, whereby correct orientation can be detected with the magnetism sensor 25 and indicated by the orientation indicating hand 13.

Since the band 3 is linked to the bows 21 via the spring rod 50, the diameter of the bow holes 23 can also be reduced, as compared with a case where titanium screw pins are used to link the band 3 to the bows 21, whereby the exterior appearance of the timepiece can also be improved.

### Variation of first embodiment

The invention is not limited to the first embodiment described above, and a variety of variations are conceivable within the scope of the substance of the invention.

For example, the end pieces 31 and the intermediate pieces 32 are not necessarily each made of a titanium-based material and may instead be made, for example, of SUS316 . That is, the end pieces 31 and the intermediate pieces 32 only need to be each made of a non-magnetic material that is unlikely to be magnetized. Further, the spring 53 is also not necessarily made of a cobalt-nickel alloy and only needs to be made of a non-magnetic material that has elasticity and is unlikely to be magnetized.

The band 3 is not limited to a metal band and may instead, for example, be a leather band or a resin band (urethane band, nylon band, and silicon band). That is, the band 3 only needs to be a band that can be fixed by using the spring rod 50.

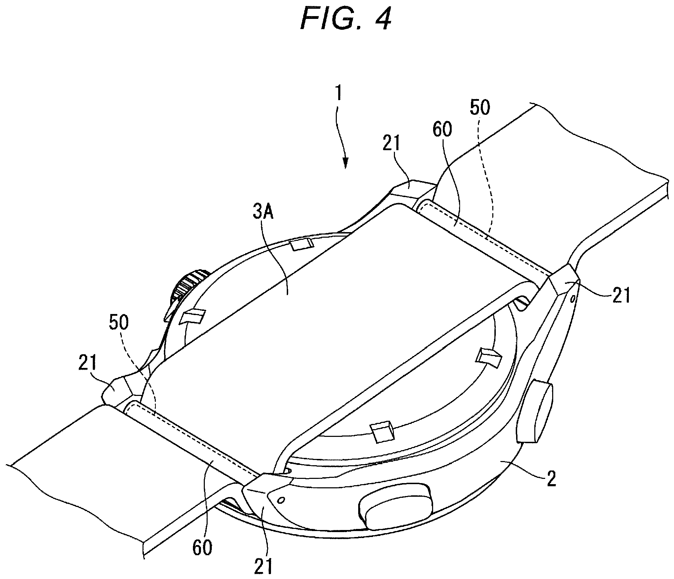

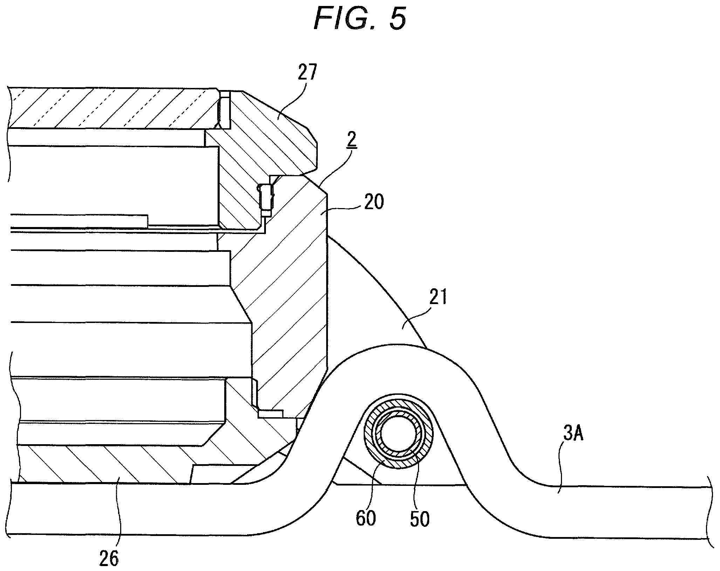

The spring rods 50 can also be used to attach a drawing pass-through band 3A, as shown in Figs. 4 and 5. The drawing pass-through band 3A is formed of a non-metal drawing pass-through band, such as a leather band, a resin band, or a silicon band. The drawing pass-through band 3A is inserted through the gap between the case 2 and the spring rod 50 on the 12-o'clock side of the case 2, caused to extend across the case back 26, and inserted through the gap between the case 2 and the spring rod 50 on the 6-o'clock-side of the case 2. The drawing pass-through band 3A is thus attached to the case 2.

The spring rods 50 are each covered with a cover member 60, which is made of a non-magnetic material. The cover member 60 is a metal pipe made of SUS316 or a titanium-based material and covers the spring rod 50 with the spring rod 50 inserted into the cover member 60. As a result, the flanges 523 of the pins 52 of the spring rod 50 are not exposed to the outside, and the drawing pass-through band 3A is inserted through the gap between the spring rod 50 and the case 2 with the drawing pass-through band 3A being in contact with the cover member 60.

Since the spring rods 50 and the cover members 60 are each made of a non-magnetic material, magnetization of the spring rods 50 and the cover members 60 can be avoided, whereby correct orientation can be detected with the magnetism sensor 25 and indicated by the orientation indicating hand 13.

Further, since the cover members 60 cover the spring rods 50, a situation in which the flanges 523 of the spring rods 50 are exposed and come into contact with the drawing pass-through band 3A can be avoided. Therefore, a situation in which the drawing pass-through band 3A is caught by the flanges 523 and ruptured can also be avoided.

In a case where a spring rod with no flange is used as the spring rod for the drawing pass-through band 3A, no cover member 60 is necessary. It is, however, noted that since the titanium spring rods 50 are expensive, it is difficult to prepare a plurality of types of spring rod 50 in accordance with whether or not the flanges are provided as well as the width between the pair of bows 21. On the other hand, providing the cover members 60 allows the spring rods 50 to be used both with the typical band 3 and the drawing pass-through band 3A, whereby the number of types of spring rod 50 can be reduced, and the cost of the timepiece can be lowered.

### Second embodiment

A magnetism sensor equipped timepiece 100 (hereinafter abbreviated to timepiece 100) according to a second embodiment of the invention will be described below with reference to the drawings. In the timepiece 100 according to the second embodiment, the same configurations as those of the timepiece 1 according to the first embodiment described above have the same reference characters, and the description of the same configurations will be simplified or omitted.

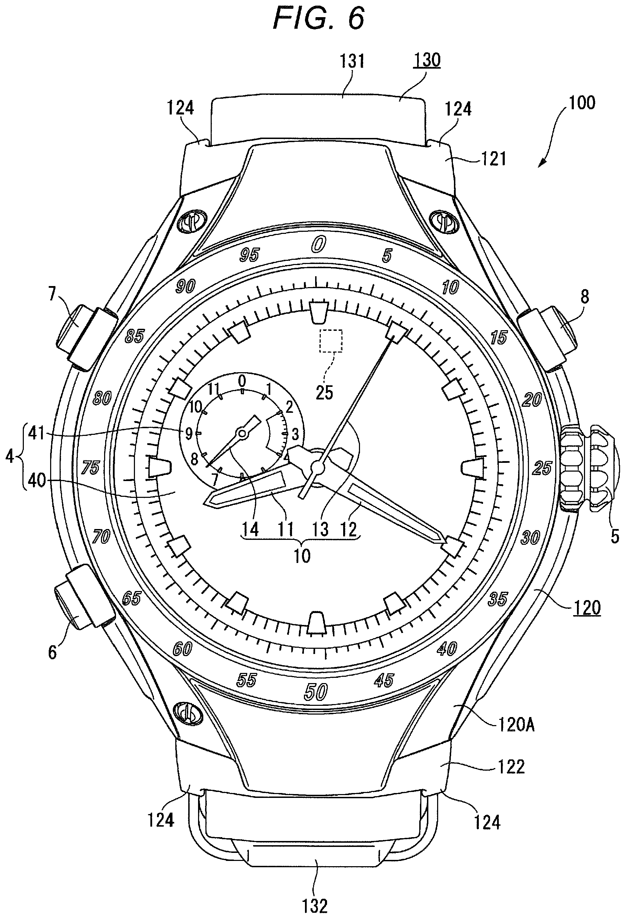

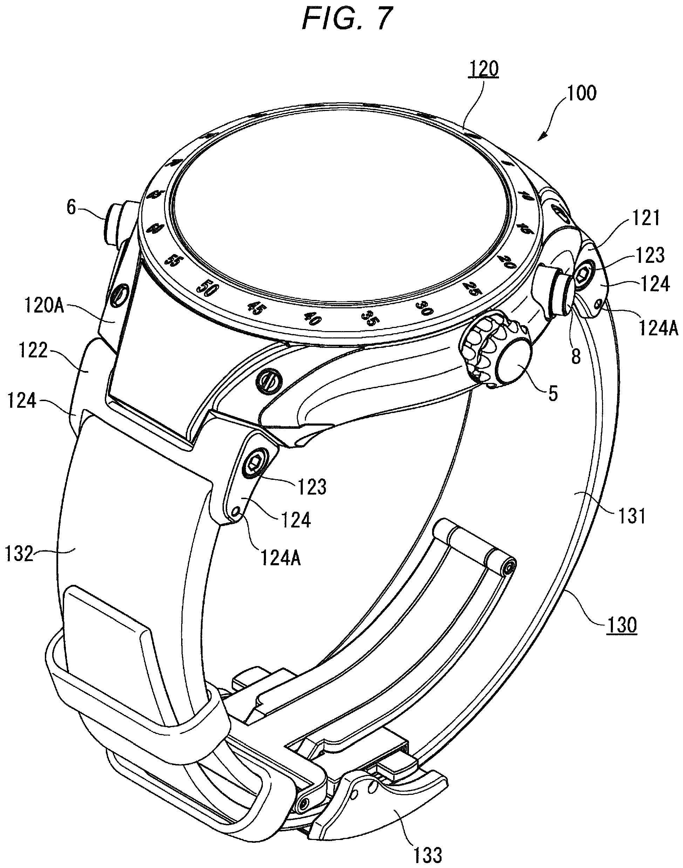

The timepiece 100 is a wristwatch worn around a user's wrist and includes an exterior case 120 and a timepiece band 130 connected to the exterior case 120, as shown in Figs. 6 and 7. The exterior case 120 is provided with a movement that is not shown, the disc-shaped dial 4, the indicating hands 10, and the crown 5, the A button 6, the B button 7, and the C button 8, which are each an operation member.

The dial 4 includes the main dial 40 and the sub-dial 41. The indicating hands 10 include the center hands (hour hand 11, minute hand 12, and orientation indicating hand 13), which indicate information provided on the main dial 40, and the small second hand 14, which indicates information provided on the sub-dial 41.

The hour hand 11, the minute hand 12, the orientation indicating hand 13, and the small minute hand 14 are each driven with a motor provided in the movement.

The exterior case 120 includes a case main body 120A and movable bows 121 and 122, which are pivotably linked to the 12-o'clock side and the 6-o'clock side of the case main body 120A, respectively, as shown in Fig. 7. The case main body 120A and the movable bows 121 and 122 are each made of a titanium-based material, and the movable bows 121 and 122 are each pivotably linked to the case main body 120A via a titanium screw pin 123.

The movable bows 121 and 122 each include a pair of attachment sections 124, to which the band 130 is attached. The attachment sections 124 each have bow holes 124A, into which a pin 170, which will be described later, is inserted.

The exterior case 120 accommodates the magnetism sensor 25. In the timepiece 100 according to the present embodiment, the magnetism sensor 25 is disposed in a position close to the 12-o'clock mark on the dial 4 in the plan view, as shown in Fig. 6.

When any of the operation members is so operated that the compass mode, in which the orientation is indicated, is selected, the magnetism sensor 25 starts operating and performs orientation measurement, and the orientation indicting hand 13 indicates the "north" direction based on the result of the measurement.

The band 130 includes a first leather band 131, which is connected to the movable bow 121 on the 12-o'clock side of the exterior case 120, a second leather band 132, which is connected to the movable bow 122 on the 6-o'clock side of the exterior case 120, and a clasp 133. The clasp 133 is made, for example, of SUS304 because the clasp 133 is so provided as to be separate from the magnetism sensor 25 and hardly affects the magnetism sensor 25 even if the clasp is magnetized.

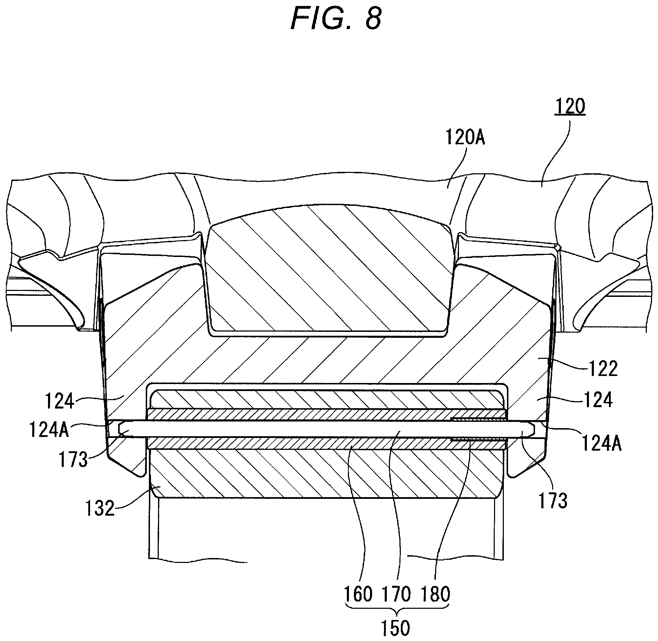

The movable bows 121 and 122 are linked to the leather bands 131 and 132, respectively, via linkage members 150, as shown in Fig. 8. The linkage members 150 each include a pipe 160, a pin 170, and a C ring 180.

The pipe 160 and the pin 170 are made of SUS316 or a titanium-based material, and the C ring 180 is made of a cobalt-nickel alloy. SUS316 and a titanium-based material are each a non-magnetic material that is unlikely to be magnetized. The cobalt-nickel alloy of which the C ring 180 is made is a non-magnetic material that behaves as a spring (has elasticity) and is unlikely to be magnetized.

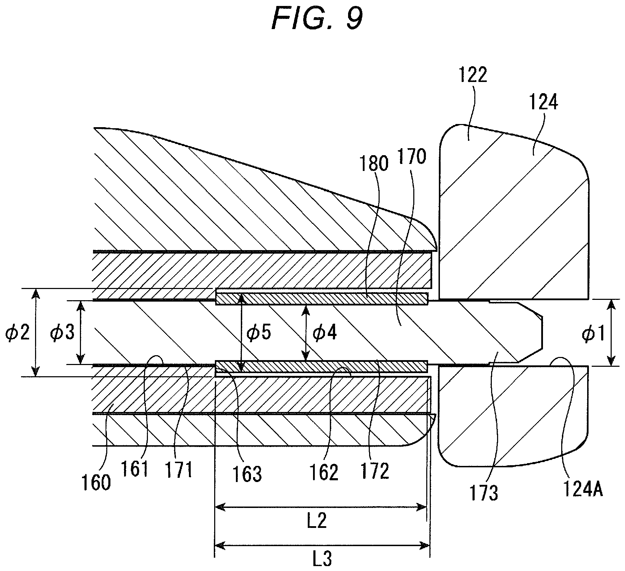

The pipe 160 is formed in a cylindrical shape. The inner circumferential surface of the pipe 160 is provided with a small-diameter section 161, which has an inner diameter that allows insertion of the pin 170, and a large-diameter section 162, the inner diameter of which is greater than the inner diameter of the small-diameter section 161, with the small-diameter section 161 and the large-diameter section 162 so formed as to be continuous with each other in the axial direction of the pipe 160, as shown also in Fig. 9. A stepped section 163 is therefore formed in the portion where the small-diameter section 161 and the large-diameter section 162 are continuous with each other. The pipe 160 is therefore a pipe with an inner surface step.

The large-diameter section 162 is formed from one opening of the pipe 160 and has an axial length L3 according to the width L2 of the C ring 180 but slightly greater than the width L2.

The inner diameter φ1 of the bow holes 124A is set at a dimension that allows insertion of the pin 170, as shown in Fig. 9, and is, for example, 0.95 mm.

The inner diameter of the small-diameter section 161 of the pipe 160 is equal to the inner diameter φ1 of the bow holes 124A (0.95 mm). The inner diameter φ2 of the large-diameter section 162 is 1.25 mm. The axial length L3 of the large-diameter section 162 is 3.00 mm.

The height of the stepped section 163 is (inner diameter φ2 of large-diameter section 162 - inner diameter φ1 of small-diameter section 161) / 2 and is (1.25-0.95)/2=0.15 mm in the present embodiment.

The pin 170 is formed in a rod-like shape having a circular cross-sectional shape. The outer circumferential surface of the pin 170 is provided with a large-diameter section 171, which is located in the position corresponding to the small-diameter section 161 described above, and a small-diameter section 172, which is located in the position corresponding to the large-diameter section 162 described above. The small-diameter section 172 is formed in a position separate from one end of the pin 170 by a predetermined dimension, and an insertion section 173, which is inserted into one of the bow holes 124A, is formed on the one end side of the small-diameter section 172. The insertion section 173 is also formed on the other end side of the pin 170, where no small-diameter section 172 is formed.

The outer diameter φ3 of the large-diameter section 171 of the pin 170 is set at a dimension that allows insertion of the large-diameter section 172 into the small-diameter section 161 of the pipe 160 and is, for example, 0.90 mm. The outer diameter φ4 of the small-diameter section 172 of the pin 170 is set at a dimension smaller than the inner diameter of the large-diameter section 162 of the pipe 160 and is, for example, 0.80 mm.

The C ring 180 is disposed in the large-diameter section 162 of the pipe 160. When the large-diameter section 171 of the pin 170 is inserted into the portion of the pipe 160 where the C ring 180 is present, the C ring 180 widens outward and is disposed in the large-diameter section 162. The large-diameter section 171 of the pin 170 can therefore be inserted into the C ring 180. Further, when the pin 170 is pushed so that the large-diameter section 171 comes off the C ring 180 and the small-diameter section 172 moves into the C ring 180, the C ring 180 returns to the original state. The outer diameter φ5 of the C ring 180 with the C ring 180 placed on the small-diameter section 172 of the pin 170 is greater than the inner diameter φ1 of the bow holes 124A and the small-diameter section 161.

Therefore, even when the pin 170 with the C ring 180 fit on the small-diameter section 172 is forced to move leftward in Fig. 9, the movement is restricted because the left end surface of the C ring 180 impinges against the stepped section 163 of the pipe 160. On the other hand, when the pin 170 is forced to move rightward in Fig. 9, the movement is restricted because the right end surface of the C ring 180 impinges against the attachment section 124. The pin 170 is therefore attached with the axial movement thereof relative to the pipe 160 restricted.

At this point, since the insertion sections 173 formed at opposite ends of the pin 170 have been inserted into the bow holes 124A, as shown in Fig. 8, the band 130 can be linked to the movable bows 121 and 122.

The step of linking the band 130 to the movable bows 121 and 122 by using the linkage members 150 will next be described.

The pipes 160 are first inserted into end portions of the band 130. Since the end portions of the band 130 each have a through hole that is formed, for example, by folding the end portion and allows insertion of the pipe 160, the pipes 160 are inserted into the through holes.

The C ring 180 is placed in the large-diameter section 162 of each of the pipes 160. The C ring 180 may be placed before or after the pipes 160 are inserted into the through holes of the band 130.

The pipes 160 and the end portions of the band 130 that have accommodated the C rings 180 are then placed between the attachment sections 124 of the movable bows 121 and 122. The pins 170 are then put into the pipes 160 through the bow holes 124A of the attachment sections 124.

The C rings 180, which each behave as a spring, are widened outward by the large-diameter sections 171 of the pins 170, and the large-diameter sections 171 pass through the C rings 180. When the small-diameter sections 172 move into the C rings 180, the diameter of the C rings 180 decreases so that the C rings 180 come into intimate contact with the small-diameter sections 172. As a result, the C rings 180 are caught by the small-diameter sections 172 of the pins 170, and the C rings 180 engage with the portions between the stepped sections 163 and the attachment sections 124 of the movable bows 121 and 122, whereby a situation in which the pins 170 fall from the pipes 160 or the bow holes 124A is avoided. The end portions of the band 130 are thus linked to the movable bows 121 and 122.

To detach the band 130, a jig is put through each of the bow holes 124A to move the pin 170 so that the diameter of the C ring 180 increases to allow the C ring 180 to come off the small-diameter section 172. As a result, since the pin 170 caught by the C ring 180 is released, the pin 170 can be directly pushed out of the pipe 160. The band 130 can thus be detached from the movable bows 121 and 122.

### Advantageous effects of second embodiment

The second embodiment described above can provide the following advantageous effects.

Since the leather bands 131 and 132 are used as the band 130, a situation in which the leather bands 131 and 132 are magnetized and affect the magnetism sensor 25 can be avoided.

Further, the pipe 160 and the pin 170, which are each made of SUS316 or titanium, and the C ring 180, which is made of a cobalt-nickel alloy, are used as the linkage member 150, which links the band 130 to the movable bows 121 and 122, the linkage member 150 can be made of materials that are unlikely to be magnetized.

A situation in which the linkage member 150 is magnetized and affects the magnetism sensor 25 can therefore be avoided. Therefore, when the magnetism sensor 25 detects the orientation, correct orientation can be detected with the magnetism sensor 25 and indicated by the orientation indicating hand 13.

In particular, in a case where the state in which the timepiece 100 is worn around the user's wrist or any other factor causes the leather bands 131 and 132 to move relative to the movable bows 121 and 122, the linkage members 150 also undesirably move. Therefore, if the linkage members 150 are magnetized, the balance between the 12-o'clock-side magnetic field of the magnetism sensor 25 and the 6-o'clock-side magnetic field of the magnetism sensor 25 changes, and the change affects the orientation detection, resulting in an error in the detected orientation. In contrast, in the present embodiment, since the linkage members 150 are each made only of materials that are unlikely to be magnetized, the balance between the magnetic fields is not affected even if the linkage members 150 move, whereby the magnetism sensor 25 can detect correct orientation.

In the case of a typical metal band, only pins and C rings are used as the linkage members. In the case of the leather bands 131 and 132 on the other hand, there are no portions where C rings are accommodated, therefore, spring rods need to be used to link the leather bands 131 and 132 to the movable bows 121 and 122.

In contrast, in the present embodiment, the pipe 160 with the inner surface steps is newly prepared and inserted into each of the leather bands 131 and 132. The C ring 180 can therefore be accommodated in the large-diameter section 162 of the pipe 160, whereby the pins 170 and the C rings 180 can be used to link the movable bows 121 and 122 to the leather bands 131 and 132, respectively. Therefore, no coil spring is necessary, and the cost of the timepiece can be lowered, as compared with the structure using a spring rod for the linkage.

Since the band 130 is linked to the movable bows 121 and 122 via the pins 170, the size of the linkage members 150 can be reduced, as compared with the case where titanium screw pins are used to link the band 130 to the movable bows 121 and 122. Therefore, the thickness of the end portions of the band 130 can be reduced, and the diameter of the bow holes 124A can be reduced, whereby the exterior appearance of the timepiece can be improved.

### Variation of second embodiment

The invention is not limited to the second embodiment described above, and a variety of variations are conceivable within the scope of the substance of the invention.

For example, the band 130 may not include the clasp 133 and may instead use a buckle or a catching stick. The band 130 is not limited to a leather band and may instead, for example, be a resin band (urethane band, nylon band, and silicon band) and only needs to be a non-metal band.

The linkage members 150 in the embodiment described above are used to link the band 130 to the movable bows 121 and 122 and can also be used to link the band 130 to bows formed integrally with the case main body 120A.

## Claims

1. A magnetism sensor equipped timepiece comprising:
a case (2) including a built-in magnetism sensor (25); and
a band (3) for the timepiece; **characterized in that**: the magnetism sensor equipped timepiece further comprises:
spring rods (50) that attach the band (3) to bows (21) of the case (2),
wherein the spring rods (50) are each formed of a pipe (51), a pin (52), and a spring (53),
the pipes (51) and the pins (52) are each made of a non-magnetic material, and
the springs (53) are made of a non-magnetic material having elasticity, and **in that**: the pipes (51) and the pins (52) are each made of a titanium-based material.

2. The magnetism sensor equipped timepiece according to claim 1,
wherein the springs (53) are made of a cobalt-nickel alloy.

3. The magnetism sensor equipped timepiece according to claim 1 or claim 2, wherein the band (3) has end pieces (31) made of a non-magnetic material, and the end pieces (31) are attached to the bows (21) of the case (2) via the spring rods (50).

4. The magnetism sensor equipped timepiece according to any of claims 1-3,
wherein the spring rods (50) are each covered with a cover member (60) made of a non-magnetic material, and
the band (3) is a drawing passthrough band made of a non-metal material.

5. A magnetism sensor equipped timepiece (100) comprising:
a case (120) including a built-in magnetism sensor (25);
a non-metal band (130) connected to bows (121, 122) of the case (120);
metal pipes (160) each attached to the band (130) and having an inner surface with a stepped portion (163);
pins (170) inserted into through holes formed in the bows (121, 122) and into the pipes (160); and
C rings (180) disposed in the pipes (160) and caught by the stepped portions (163) when the pins (170) are inserted,
wherein the pipes (160) and the pins (170) are each made of a non-magnetic material, and
the C rings (180) are made of a non-magnetic material having elasticity, and
wherein the pipes (160) and the pins (170) are each made of SUS316 or a titanium-based material.

6. The magnetism sensor equipped timepiece according to claim 5
wherein the C rings (180) are made of a cobalt-nickel alloy.

7. The magnetism sensor equipped timepiece according to any of claim 5 or claim 6,
wherein the case (120) includes a case main body (120) including the built-in magnetism sensor (25) and movable bows (121, 122) linked to the case main body (120), and
the band (130) is connected to the movable bows (121, 122) via the pins.

## Patentansprüche

1. Mit einem Magnetismussensor ausgestattete Uhr, umfassend:
ein Gehäuse (2), das einen eingebauten Magnetismussensor (25) einschließt; und
ein Band (3) für die Uhr; **dadurch gekennzeichnet, dass**: die mit einem Magnetismussensor ausgestattete Uhr weiterhin umfasst:
Federstangen (50), die das Band (3) an Bögen (21) des Gehäuses (2) befestigen,
wobei die Federstangen (50) jeweils aus einem Rohr (51), einem Stift (52) und einer Feder (53) gebildet sind,
die Rohre (51) und die Stifte (52) jeweils aus einem nichtmagnetischen Material gefertigt sind, und
die Federn (53) aus einem nichtmagnetischen Material gebildet sind, das Elastizität aufweist, und dadurch, dass: die Rohre (51) und die Stifte (52) jeweils aus einem Material auf Titanbasis gefertigt sind.

2. Mit einem Magnetismussensor ausgestattete Uhr nach Anspruch 1,
wobei die Federn (53) aus einer Kobalt-Nickel-Legierung gefertigt sind.

3. Mit einem Magnetismussensor ausgestattete Uhr nach Anspruch 1 oder Anspruch 2,
wobei das Band (3) Endstücke (31) aufweist, die aus einem nichtmagnetischen Material gefertigt sind, und die Endstücke (31) an den Bögen (21) des Gehäuses (2) über die Federstangen (50) befestigt sind.

4. Mit einem Magnetismussensor ausgestattete Uhr nach einem der Ansprüche 1 bis 3,
wobei die Federstangen (50) jeweils mit einem Abdeckelement (60) bedeckt sind, das aus einem nichtmagnetischen Material gefertigt ist, und
das Band (3) ein Durchgangsband ist, das aus einem nichtmetallischen Material gefertigt ist.

5. Mit einem Magnetismussensor ausgestattete Uhr (100), umfassend:
ein Gehäuse (120), das einen eingebauten Magnetismussensor (25) einschließt;
ein Nichtmetallband (130), das mit Bögen (121, 122) des Gehäuses (120) verbunden ist;
Metallrohre (160), die jeweils an dem Band (130) befestigt sind und eine Innenoberfläche mit einem abgestuften Abschnitt (163) aufweisen;
Stifte (170), die in Durchgangslöcher, die in den Bögen (121, 122) gebildet sind, und in die Rohre (160) eingeführt sind; und
C-Ringe (180), die in den Rohren (160) angeordnet sind und von den abgestuften Abschnitten (163) erfasst werden, wenn die Stifte (170) eingeführt sind,
wobei die Rohre (160) und die Stifte (170) jeweils aus einem nichtmagnetischen Material gefertigt sind, und
die C-Ringe (180) aus einem nichtmagnetischen Material gefertigt sind, das Elastizität aufweist, und
wobei die Rohre (160) und die Stifte (170) jeweils aus einem Material von SUS316 oder einem Material auf Titanbasis gefertigt sind.

6. Mit einem Magnetismussensor ausgestattete Uhr nach Anspruch 5,
wobei die C-Ringe (180) aus einer Kobalt-Nickel-Legierung gefertigt sind.

7. Mit einem Magnetismussensor ausgestattete Uhr nach einem der Ansprüche 5 oder 6,
wobei das Gehäuse (120) einen Gehäusehauptkörper (120) einschließlich des eingebauten Magnetismussensors (25) und bewegliche Bögen (121, 122) einschließt, die mit dem Gehäusehauptkörper (120) verbunden sind, und
das Band (130) über die Stifte mit den beweglichen Bögen (121, 122) verbunden ist.

## Revendications

1. Pièce d'horlogerie équipée d'un capteur de magnétisme comprenant :
un boîtier (2) incluant un capteur de magnétisme incorporé (25) ; et
un bracelet (3) pour la pièce d'horlogerie ; **caractérisée en ce que** : la pièce d'horlogerie équipée du capteur de magnétisme comprend en outre :
des tiges à ressort (50) qui attachent le bracelet (3) à des saillies (21) du boîtier (2),
dans laquelle les tiges à ressort (50) sont formées chacune d'un tube (51), d'un ergot (52) et d'un ressort (53),
les tubes (51) et les ergots (52) sont faits chacun d'une matière non magnétique, et
les ressorts (53) sont faits d'une matière non magnétique ayant une certaine élasticité, et **en ce que** : les tubes (51) et les ergots (52) sont faits chacun d'une matière à base de titane.

2. Pièce d'horlogerie équipée d'un capteur de magnétisme selon la revendication 1, dans laquelle les ressorts (53) sont faits d'un alliage de cobalt-nickel.

3. Pièce d'horlogerie équipée d'un capteur de magnétisme selon la revendication 1 ou la revendication 2,
dans laquelle le bracelet (3) possède des pièces d'extrémité (31) faites d'une matière non magnétique, et les pièces d'extrémité (31) sont attachées aux saillies (21) du boîtier (2) via les tiges à ressort (50).

4. Pièce d'horlogerie équipée d'un capteur de magnétisme selon l'une quelconque des revendications 1 à 3, dans laquelle les tiges à ressort (50) sont recouvertes chacune d'un élément de couverture (60) fait d'une matière non magnétique, et
le bracelet (3) est un bracelet traversant à étirage fait d'une matière non métallique.

5. Pièce d'horlogerie (100) équipée d'un capteur de magnétisme comprenant :
un boîtier (120) incluant un capteur de magnétisme incorporé (25) ;
un bracelet non métallique (130) relié à des saillies (121, 122) du boîtier (120) ;
des tubes de métal (160) attachés chacun au bracelet (130) et ayant une surface intérieure avec une portion étagée (163) ;
des ergots (170) insérés dans des trous traversants formés dans les saillies (121, 122) et dans les tubes (160) ; et
des bagues en C (180) disposées dans les tubes (160) et capturées par les portions étagées (163) lorsque les ergots (170) sont insérés,
dans laquelle les tubes (160) et les ergots (170) sont faits chacun d'une matière non magnétique, et
les bagues en C (180) sont faites d'une matière non magnétique ayant une certaine élasticité, et
dans laquelle les tubes (160) et les ergots (170) sont faits chacun de SUS316 ou d'une matière à base de titane.

6. Pièce d'horlogerie équipée d'un capteur de magnétisme selon la revendication 5, dans laquelle les bagues en C (180) sont faites d'un alliage de cobalt-nickel.

7. Pièce d'horlogerie équipée d'un capteur de magnétisme selon l'une quelconque de la revendication 5 ou de la revendication 6,
dans laquelle le boîtier (120) inclut un corps principal de boîtier (120) incluant le capteur de magnétisme incorporé (25) et des saillies mobiles (121, 122) liées au corps principal de boîtier (120), et
le bracelet (130) est relié aux saillies mobiles (121, 122) via les ergots.
